Europäisches Patentamt

European Patent Office

Office européen des brevets

(11) Veröffentlichungsnummer: **0 184 023**
**A1**

## EUROPÄISCHE PATENTANMELDUNG

(21) Anmeldenummer: 85114259.6

(22) Anmeldetag: 08.11.85

(51) Int. Cl.⁴: **G06F 12/14**

(30) Priorität: 13.11.84 CH 5422/84

(43) Veröffentlichungstag der Anmeldung:
11.06.86 Patentblatt 86/24

(84) Benannte Vertragsstaaten:
AT CH DE FR GB IT LI NL

(71) Anmelder: **Software Protect Ltd.**
**Geissacher 6**
**CH-8126 Zumikon(CH)**

(72) Erfinder: **Kunz, Heinrich O.**
**Konradstrasse 28**
**CH-8005 Zürich(CH)**

(74) Vertreter: **Punschke und Frei Patentanwälte**
**Hedwigsteig 6 Postfach 95**
**CH-8029 Zürich(CH)**

(54) Verfahren und Einrichtung zum Schutz vor unberechtigtem Betrieb geschützter Programme in einem Mikrocomputer.

(57) Das Verfahren zum Schutz vor unberechtigtem Betrieb geschützter Programme oder Programmteile in einem Mikrocomputer sieht vor, dass das geschützte Programm oder Programmteil mit Hilfe eines im Standard-Prozessor sonst nicht verwendeten Befehls selbsttätig eine im erweiterten Standard-Prozessor vorgesehene Verzweigung (44/40; 42, 43) der Adress- und/oder Datenleitungen auf einen Decodierer (40) einschaltet und dass diese Verzweigung durch Aufheben des Befehls desaktivierbar ist. Zur Initialisierung einer Schutzwirkung werden mindestens zwei einander ergänzende und auf den verwendeten Befehl abgestimmte Schlüsselcode-Informationen voneinander getrennt und zugriffgeschützt in Speichermedien (3, 4A, 4B) innerhalb des erweiterten Standard-Prozessors eingeprägt. Der für die Umschaltung bestimmte Befehl enthält mindestens zwei Parameter (X, OFFSET), von denen mindestens einer die Information darüber enthält, in welchem Adressbereich das verschlüsselte Programm abgelegt ist.

Fig.1

EP 0 184 023 A1

# VERFAHREN UND EINRICHTUNG ZUM SCHUTZ VOR UNBERECHTIGTEM BETRIEB GESCHUETZTER PROGRAMME IN EINEM MIKROCOMPUTER

Die Erfindung betrifft ein Verfahren und eine Einrichtung zum Schutz vor unberechtigtem Betrieb geschützter Programme oder Programmteile in einem Mikrocomputer mit einem Standard-Prozessor, gemäss dem Oberbegriff von Patentanspruch 1 bzw. 7.

Die zum Betreiben von Datenverarbeitungsanlagen erforderlichen Betriebsprogramme sowie auch Anwenderprogramme stellen einen erheblichen materiellen Wert dar, der denjenigen der Anlage selbst nicht selten bei weitem übertrifft. Es ist hinlänglich bekannt, dass derartige Programme immer wieder unberechtigterweise kopiert werden, wodurch den Programmherstellern beträchtliche materielle Schäden entstehen. Es ist daher nicht verwunderlich, dass die Programmhersteller Verfahren zum Schutz ihrer Werke anwenden, um das unberechtigte Kopieren von berechtigt in den Verkehr gebrachten Programmen zu unterbinden. Erschwerend wirkt sich die Notwendigkeit aus, von jedem erworbenen Programm Sicherheitskopien anfertigen zu müssen, um gegen Beschädigungen des Programmträgers oder gegen Fehlmanipulationen geschützt zu sein. Ausserdem hat es sich erwiesen, dass bisher keines der bekannten Schutzverfahren absolute Gewähr gegen Raubkopien bieten kann, da der relativ hohe Marktpreis guter Programme zu erheblichen Anstrengungen auf der Seite von "Knack"-Spezialisten ermuntert. Es sind sogar Programme zum Ueberwinden von Kopierschutz-Massnahmen auf dem Markt erhältlich.

Es ist Aufgabe der vorliegenden Erfindung, ein Verfahren und eine Einrichtung der eingangs definierten Art dahingehend weiterzuentwickeln, dass eine Möglichkeit zur Verschlüsselung von Programmen in Verbindung mit ergänzenden Massnahmen am Standard-Prozessor geschaffen wird, wobei die Entschlüsselung nur über einen mehrfachen Schlüssel möglich sein soll und ein Teil des Schlüssels nur dem Programmhersteller vorbehalten und zugänglich sein soll, während die anderen Teile anwenderbezogen definierbar sein sollen.

Diese Aufgabe wird erfindungsgemäss durch die in den Patentansprüchen definierten Merkmale gelöst.

Damit wird erreicht, dass vom Programmhersteller verschlüsselte Programme nur mit Hilfe eines auf den Programmhersteller bezogenen Schlüsselteils sowie eines dem rechtmässigen Benutzer zugeteilten Schlüsselteils vom Rechner entschlüsselt werden können. Nur ein mit der "richtigen" Decodierung ausgestatteter Prozessor kann die richtige Zuordnung zwischen geschützten Programminstruktionen und dem fest definierten Schlüssel vornehmen und damit die geschützten Programme oder Programmteile verarbeiten. Ein unberechtigtes Verarbeiten solcher Programme ist wegen der enorm hohe Zahl denkbarer Kombinationen sowie wegen weiterer Sicherheitsmassnahmen praktisch nicht mehr möglich. Die berechtigte Benutzung der Programme wird dagegen durch die beanspruchten Massnahmen ermöglicht, ohne dass der Benutzer irgendwelche Einschränkungen im Ablauf gegenüber dem Standard-Prozessor in Kauf nehmen müsste. Als weiterer entscheidender Vorteil erlaubt die erfindungsgemässe Lösung die Benutzung ungeschützter Programme. In diesem Fall ist die Schlüsselschaltung selbsttätig abgeschaltet. Auf besonders vorteilhafte Weise erfolgt die gesamte zusätzliche Verarbeitung ohne irgendeinen Geschwindigkeitsverlust des Standard-Prozessors, so dass die üblichen Verarbeitungszyklen erhalten bleiben.

Im folgenden werden Einzelheiten der Erfindung sowie bevorzugte Ausführungsbeispiele anhand der Zeichnungen näher erläutert.

Es zeigen:

Fig. 1 das Blockschaltbild eines programmschützenden Prozessors unter Einschluss eines bevorzugten Ausführungsbeispiels der Erfindung, mit daran angeschlossenem Programmspeicher und

Fig. 2 das Blockschaltbild der Verzweigungssteuerung gemäss Fig. 1.

Der Schutz der Programme bezieht sich, wie allgemein üblich, auf den Bereich der Instruktionen und der Operationscodes, nicht jedoch auf die zu verarbeitenden Daten selbst. Bei handelsüblichen Standard-Prozessoren ist beispielsweise eine Instruktion 1 bis 6 Bytes lang. Davon belegt der Operations-code in der Regel 1 oder 2 Bytes. Mit einem solchen Prozessor lassen sich derzeit bis zu mehreren 10'000 verschiedene Operationscodes unterscheiden. Wird nun der Operationcode nicht starr definiert, sondern nach wechselnden Regeln, nämlich gemäss eines durch schaltungstechnische Massnahmen wohl definierten Schlüssels, wird damit die Entschlüsselung des Operationscodes von der Kenntnis des gewählten Schlüssels abhängig. Wird ausserdem die schaltungsmässige Verkörperung des Schlüssels nach seiner Festlegung jedem äusseren Eingriff entzogen, so lässt sich mit dieser Massnahme ein hohes Mass an Sicherheit gegen unberechtigten Gebrauch von Programmen erreichen, deren Operationscodes auf den gewählten Schlüssel abgestimmt ist. Dieses Schutzprinzip lässt sich nicht nur für Operationscodes, sondern auch für die Operanden in einer Instruktion oder allgemein für Objektcodes verwenden und ist nicht auf einen dieser Codes beschränkt.

Gemäss einem weiteren Grundprinzip der Erfindung ist der Schlüssel durch das zu schützende Programm selbst ein- bzw. ausschaltbar, so dass mit dem gleichen Prozessor und der gleichen Peripherie-Schaltung sowohl geschützte Programme lesbar sind, auf welche der schaltungstechnisch eingestellte Schlüssel passt, als auch ungeschützte Programme auf die herkömmliche Weise.

Zur Erhöhung der Zugriffssicherheit ist der Schlüssel in mehrere, vorzugsweise in zwei Teile geteilt. Beispielsweise ist ein erster Teil der Schlüsselcode-Information in einem ersten Speicherteil enthalten, der vom Prozessor-Hersteller konfiguriert wird. Ein zweiter oder weitere Teile der Schlüsselcode-Information sind in Speicherteilen untergebracht, die dem Programmhersteller oder -Vertreiber zugänglich sind. Ueber zugeordnete Schlüsselcode-Informationen, die auf dem Programmträger vom Programmhersteller untergebracht werden, wird die Erkennung des vom Programmhersteller gewählten Codes ermöglicht. Dem Programmhersteller steht zu diesem Zweck eine definierte Schlüsselvielfalt zur Verfügung.

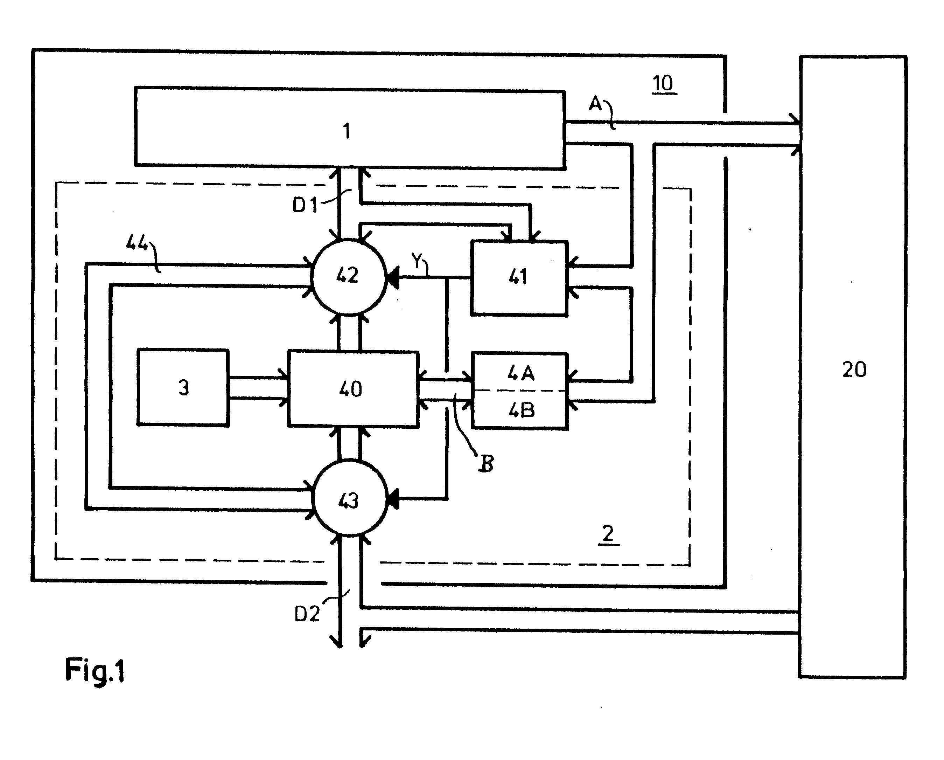

Der programmschützende Prozessor 10 gemäss Fig. 1, der über einen Adressenbus A und über einen externen Datenbus D2 an einen prozessor-externen Programmspeicher 20 angeschlossen ist, enthält ausser dem Standard-Prozessor 1 einen mit den Prozessorsignalleitungen verbundenen Entschlüsselungsblock 2. Der Entschlüsselungsblock 2 enthält einerseits eine Festwertspeicher 3 und andererseits eine Kundenschlüssel-Speicher 4, welche beide an einen Decodierer 40 für die verschlüsselten Instruktionen angeschlossen sind. Der Decodierer 40 befindet sich in der Datenbusleitung zwischen dem vom Programmspeicher 20 kommenden externen Datenbus D2 und dem internen Datenbus D1 des Standard-Prozessors 1. In den Busleitungen vor und nach dem Decodierer 40 sind gesteuerte Verzweigungs-Umschalter 42 und 43 vorgesehen, welche die auf dem externen Datenbus D2 vom Programmspeicher 20 ankommenden Instruktionen unter Steuerung eines von einer Verzweigungssteuerung 41 kommenden Steuersignals Y zwischen einer Umwegleitung 44 und dem Decodierer 40 umschalten. Alle diese Schaltungsteile sind entweder monolithisch oder hybrid mit dem Standard-Prozessor 1 integriert. Ferner sind die Speicher 3 und 4A, 4B sowie der interne Datenbus D1 zum Standard-Prozessor zugriffsgeschützt. Beispielsweise sind die Teile gemeinsam eingekapselt und/oder eingegossen.

Der Festwertspeicher 3 dient zur Festlegung eines herstellerspezifischen Schlüssels, welcher sich nach der Fertigstellung des Prozessors nicht mehr ändern lässt. Die in diesem Speicher festgelegte Art der Programm- bzw. Instruktions-Decodierung ist durch schaltungstechnische Massnahmen definiert, und beispielsweise in Form einer bestimmten Maske für die Herstellung dieses Schaltungsteils festgelegt.

Der "Kundenschlüssel"-Speicher 4 als programmabhängiger Schlüssel-Speicherteil ist zwar ebenfalls durch Schaltungselemente verkörpert, er ist jedoch nach Fertigstellung des Prozessors beispielsweise durch den Hersteller eines zu schützenden Programms konfigurierbar. Beispielsweise ist er als Nur-Lese-Speicher in Form eines PROM oder EPROM ausgebildet.

Dieser Kundenschlüssel-Speicher 4 ist im Beispiel in zwei Teile gegliedert und, wie in Fig. 1 angedeutet, mit seiner Ausgangsleitung B an den Decodierer 40 angeschlossen. Ein erster Teil 4 A dieses Speichers ist als fixer Kundenschlüssel-Teil ausgebildet, während der zweite Teil als individuell zuteilbarer Kundenschlüssel-Teil 4 B ausgeführt ist. Der erste Teil 4 A dient dabei zur Zuweisung an einen bestimmten Programmhersteller, der in diesem Speicherteil einen für ihn charakteristischen Schlüsselteil einspeichern lassen kann. Im Unterschied zum herstellerspezifischen Schlüssel, welcher einmal festgelegt ist, lässt sich im Kundenschlüssel-Teil 4 A ein Code aus einer sehr grossen Zahl verschiedener Varianten für den Kundenschlüssel festlegen. Nur mit einer einzigen Variante ist die Entschlüsselung eines bestimmten Programms möglich.

Der individuell zuteilbare Kundenschlüssel-Teil 4 B schliesslich stellt eine dritte Stufe des Schlüsselsystems dar, welches auf den Programm-Kunden bzw. auf den berechtigten Betreiber eines geschützten Programms bezogen ist. Der erste und der zweite Kundenschlüssel-Teil 4 A und 4 B sind in dem Nur-Lesespeicher gegen Manipulationen geschützt, da das verwendete Bauteil kein Ueberschreiben oder Abändern einer einmal eingegebenen Code-Kombination erlaubt. Bei einem solchen Versuch würde der Inhalt entsprechender Speicherplätze irreversibel in Richtung eines allen Speicherplätzen gemeinsamen Speicherzustandes verändert.

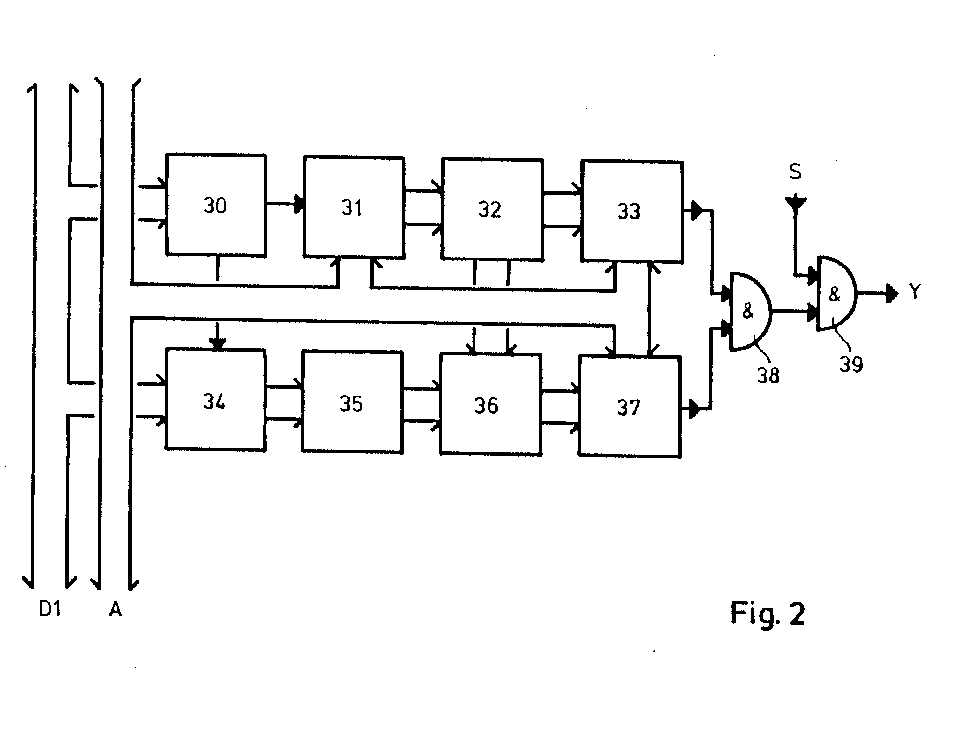

Das beschriebene Prinzip des dreifachen Schlüssels schafft in Verbindung mit der praktischen Unmöglichkeit der Code-Manipulation mit relativ einfachem Bauaufwand ein besonders hohes Mass an Sicherheit gegen unberechtigte Benutzung eines auf die Schlüsselkombination abgestimmten Programms. Die Funktionsweise wird im folgenden anhand der Figur 2 beschrieben.

Wie bereits angedeutet, beruht das Prinzip der Verschlüsselung auf einem herstellerspezifischem Teil und einem bzw. zwei kundenspezifischen Teilen des Schlüssels. Der Hersteller des Prozessors kennt nur den Code des für ihn reservierten Teils im Speicher 3, nicht aber den kundenspezifischen Teil. Andererseits kennt der Kunde nur den für ihn reservierten, nicht aber den herstellerspezifischen Teil des Schlüssel-Codes. Zur Bearbeitung geschützter Programme ist es notwendig, im Besitz der beiden aufeinander abgestimmten Schlüsselteile zu sein, nämlich des durch den Prozessor-Hersteller hardware-mässig konfigurierten und des durch den Programmhersteller bestimmten Schlüsselteils.

Durch die vom Programm selbsttätig ansteuerbare Verzweigungssteuerung 41 lässt sich die Verschlüsselung nur für geschützte Programme über die Umschalter 42, 43 einschalten, so dass ungeschützte Programme über die Umwegleitung 44 am Codierer vorbeigeleitet werden und wie gewohnt vom Standard-Prozessor abgearbeitet werden können. Geschützte Programme, bei denen die Schlüsselcode-Informationen mit den abgespeicherten Codeteilen nicht übereinstimmen, können nicht verarbeitet werden.

Die Einschaltung der Entschlüsselung für ein geschütztes Programm geschieht durch einen sonst ungenutzten Befehl. Dieser Befehl enthält im Beispiel zwei Parameter: X und OFFSET. Die OFFSET-Grösse gibt an, in welchem Adressbereich das verschlüsselte Programm abgelegt ist. Dieser Adressbereich erstreckt sich von derjenigen Adresse, an welcher der Befehl selbst steht, bis zu einem um den OFFSET höheren Wert.

Sprünge aus dem verschlüsselten Adressbereich in den unverschlüsselten, sei es durch Unterbrechungsanforderungen oder Sprungbefehle, schalten die Entschlüsselung aus. Beim Rücksprung schaltet sich die Entschlüsselung automatisch wieder ein.

Die Entschlüsselung lässt sich auch für den gesamten Adressbereich des Prozessors ausschalten. Dazu ist im Beispiel ein Entschlüsselungsbefehl vorgesehen, z.B. OFFSET = 0.

Für die Ein-/Ausschaltung der Verzweigung und damit für die Aktivierung der Entschlüsselungseinrichtung ist die Verzweigungssteuerung 41 im Entschlüsselungsblock 2 gemäss Fig. 2 ausgebildet. Am Datenbus D1 ist eine Steuerschaltung 30 angeschlossen, welche auf den als Steuerbefehl ausgewählten und im Programm sonst nicht verwendeten Befehl reagiert. Die Steuerschaltung 30 ist über einen ersten Steuerausgang mit einer Ladeschaltung 31 verbunden, welche die untere Adressen-Bereichsgrenze des verschlüsselten Programms vom Adressenbus A in einen ersten Speicher 32 für die untere Adressen-Bereichsgrenze einliest. Andererseits steht die Steuerschaltung 30 über einen zweiten Steuerausgang mit einer zweiten Ladeschaltung 34 und einem zweiten Speicher 35 für den zweiten Adressenbereichs-Parameter (OFFSET) in Verbindung. An den ersten Speicher 32 ist ein erster Vergleicher 33 angeschlossen, welcher den Zustand des ersten Speichers 32 mit dem Inhalt auf dem Adressenbus A vergleicht. Eine Summationsschaltung 36 ist mit ihren Eingängen mit den Ausgängen der ersten und dem zweiten Speicher 32, 35 verbunden. Der Ausgang der Summationsschaltung, an welchem ein die obere Adressenbereichsgrenze bezeichnendes Signal anfällt, ist auf einen zweiten Vergleicher 37 geführt, welcher das Summationsergebnis mit den Angaben auf dem Adressbus A vergleicht. Die Ausgänge des ersten und des zweiten Vergleichers 33, 37 sind in einer ersten UND-Schaltung 38 miteinander verknüpft. Der Ausgang der ersten UND-Schaltung ist in einer zweiten UND-Schaltung 39 mit einem prozessorbezogenen Steuersignal S verknüpft, welches einen Programm-Lesezyklus bestimmt. Das Ausgangssignal Y der zweiten UND-Schaltung 39 zeigt an, ob sich die jeweils auf dem Adressenbus A befindende Adresse im vorgegebenen Bereich befindet, der für die Einschaltung der Entschlüsselung reserviert ist und ob somit auf dem Datenbus D2 bzw. D1 ein Programmcode ansteht, welcher aus dem geschützten Adressbereich stammt. Ist dies der Fall, wird die im folgenden näher beschriebene Verzweigung eingeschaltet.

Nachdem der Prozessor die Adresse ausgibt, an welcher er die nächste Instruktion erwartet, liefert der Programmspeicher 20 das erste "Word" oder Byte der aufgerufenen Instruktion. Es sei angenommen, dies sei ein Code für den Entschlüsselungsbefehl. Der auf dem Datenbus D2 anfallende Code steuert innerhalb der Verzweigungssteuerung 41 die Steuerschaltung 30 an. Anstelle des auf diese Weise abgefangenen Codes wird an den Standard-Prozessor 1 ein NOP-Signal (No Operation) geliefert.

Daraufhin kann der Prozessor 1 die nächste Adresse ausgeben, worauf der Programmspeicher 20 den ersten Parameter liefert, nämlich die Nummer X der Verschlüsselungsvarianten. Mittels dieser Nummer X wird der entsprechende Teil des Kundenschlüssels aus dem Kundenschlüsselspeicher 4 ausgelesen. An den Standard-Prozessor 1 wird wiederum ein NOP-Signal zur Auslösung der folgenden Adresse geliefert.

Diese dritte vom Standard-Prozessor 1 aufgerufene Adresse stellt die Information über die untere Grenze des verschlüsselten Bereichs dar und wird im ersten Speicher 32 der Verzweigungssteuerung 41 abgespeichert. Der aufgrund dieser Adresse aus dem Programmspeicher 20 aufgerufene Code enthält den zweiten Parameter, nämlich den OFFSET. Innerhalb der Verzweigungssteuerung 41 wird der OFFSET in die Ladeschaltung 34 eingegeben, im zweiten Speicher 35 gespeichert und im Summierer 36 zur unteren Bereichsgrenze addiert. Das Ergebnis stellt die obere Bereichsgrenze des verschlüsselten Bereichs dar. Dem Standard-Prozessor 1 wird wiederum ein NOP-Signal weitergegeben.

Beim Eintreffen der nächsten Programm-Instruktion aus dem Programmspeicher 20 stellt die Verzweigungssteuerung 41 fest, dass die Adresse im verschlüsselten Bereich steht. Daraufhin wird die Entschlüsselung über das Steuersignal Y mit Hilfe der Umschalter 42 und 43 eingeschaltet. Dieses erste verschlüsselte "Word" oder Byte wird nun über den Decodierer 40 geleitet, dort entschlüsselt und in entschlüsselter Form über den internen Datenbus D1 dem Standard-Prozessor 1 weitergegeben.

Vorteilhafterweise werden im Entschlüsselungsblock 2 schnellere Schaltkreise verwendet als sie für den Standard-Prozessor 1 selbst erforderlich sind. Der Aufwand für schnellere Schaltkreise bleibt jedoch auf den zusätzlichen Entschlüsselungsblock 2 beschränkt, so dass der Prozessor unverändert in der traditionellen Technik hergestellt sein kann. Durch diese Massnahmen tritt kein Geschwindigkeitsverlust für den modifizierten Prozessor während der Abarbeitung der Instruktionen auf. Die beschriebenen zusätzlichen Vorgänge laufen innerhalb der für den Standard-Prozessor charakteristischen Zykluszeiten ab.

**Ansprüche**

1. Verfahren zum Schutz vor unberechtigtem Betrieb geschützter maschinenlesbarer Programme oder Programmteile in einem Mikrocomputer mit einem Standard-Prozessor, mit einer den Standard-Prozessor erweiternden Entschlüsselungseinrichtung, sowie mit einer Verzweigungseinrichtung in den Adress- und/oder Datenleitungen, dadurch gekennzeichnet, dass die Aktivierung der Verarbeitung geschützter Programme oder Programmteile mit einem im Standard-Prozessor sonst nicht verwendeten Befehl vom geschützten Programm selbst vorgenommen wird, dass während der genannten Aktivierung eine im erweiterten Prozessor vorgesehene Verzweigung der Adress- und/oder Datenleitungen auf die Entschlüsselungseinrichtung geschaltet und nach Wegfall der Aktivierung wieder in den ursprünglichen Zustand zurückgeschaltet wird, wobei die Umschaltung durch den genannten Aktivierungsbefehl ausgelöst wird.

2. Verfahren nach Anspruch 1, dadurch gekennzeichnet, dass der für die Umschaltung bestimmte Befehl mindestens zwei Parameter (X, OFFSET) aufweist, von denen mindestens einer die Information darüber enthält, in welchem Adressbereich das verschlüsselte Programm abgelegt ist.

3. Verfahren nach Anspruch 1, dadurch gekennzeichnet, dass als Adressbereich für das verschlüsselte Programm der Bereich von der Adresse, an welcher der Befehl selbst steht, bis zu einem um den zweiten Parameter (OFFSET) höheren Wert gewählt wird.

4. Verfahren nach Anspruch 1, dadurch gekennzeichnet, dass für jede durch den Standardprozessor neu aufgerufene Instruktion geprüft wird, ob sie im verschlüsselten Adressbereich liegt oder nicht, und dass entsprechend dem Resultat der Prüfung die Entschlüsselungseinrichtung über die genannte Verzweigung zu- oder abgeschaltet wird, wobei diese Prüfung in einer Zeitspanne erfolgt, welche kleiner ist als die Zykluszeit des Standard-Prozessors.

5. Verfahren nach Anspruch 1, dadurch gekennzeichnet, dass in der Entschlüsselungseinrichtung mehrere Schlüsselcode-Bereiche definiert werden, welche verschiedenen, voneinander unabhängigen Zugriffsebenen zugeordnet werden, dass mindestens einer dieser Bereiche bei der Herstellung des erweiterten Prozessors unveränderbar und lese-geschützt codiert wird, dass mindestens ein zweiter Bereich auf eine zu schützende Programm-Gruppe bezogen codiert wird und dass Vmindestens ein dritter Bereich auf das einzeln zu schützende Programm bezogen codiert wird.

6. Verfahren nach mindestens einem der Ansprüche 1 bis 5, dadurch gekennzeichnet, dass in einem der Enntschlüsselungseinrichtung zugeordneten Schlüsselcode-Speicher eine Vielzahl· von Programm-Schlüsseln eingeprägt wird, wobei durch den Parameter (X) des für die Aktivierung der Entschlüsselung zuständigen Befehls bestimmt wird, welcher der eingeprägten Programm-Schlüssel zur Anwendung gelangt.

7. Einrichtung zur Durchführung des Verfahrens nach Anspruch 1, mit einem Programmcode-Entschlüsselungsblock (2), welcher zusammen mit einem Standardprozessor (1) und mindestens einem dem Standardprozessor direkt zugeordneten Speicher (4) in einer integrierten Schaltung (10) untergebracht sind, wobei der Speicher mit dem Adressbus (A) in Verbindung steht und zur Aufnahme von Tabellen für eine adressabhängige Programmcode-Entschlüsselung ausgebildet ist, dadurch gekennzeichnet, dass auf der integrierten Schaltung (10) mindestens ein zweiter Speicherbereich (3) vorgesehen ist, welcher bei der Herstellung der integrierten Schaltung unveränderbar konfigurierbar ist, wobei der zweite Speicherbereich zur Definition einer Programmiererspezifischen Schlüsselcode-Information ausgebildet ist, und dass der erste Speicher (4) als einmalig mit einem Anwender-Code konfigurierbarer Nur-Lese-Speicher ausgebildet ist.

8. Einrichtung nach Anspruch 7, dadurch gekennzeichnet, dass die integrierte Schaltung als Hybridschaltung ausgebildet ist.

9. Einrichtung nach Anspruch 7, dadurch gekennzeichnet, dass der Entschlüsselungsblock (2) eine Verzweigungssteuerung (41) enthält mit Mittel (30-39) zur Analyse des Adressbus (A) unter Berücksichtigung von Signalen auf Prozessor-Steuerleitungen (S), und dass die Mittel (30-39) zur Erzeugung eines Steuersignals ausgebildet sind, sobald auf dem von einem Programmspeicher (20) kommenden externen Datenbus (D2) ein zu entschlüsselnder Befehl vorliegt, wobei das Steuersignal über Steuerleitungen (Y) Umschaltern (42, 43) zugeführt ist und wobei die Umschalter (42, 43) den externen Datenbus (D2) von einer Umwegleitung (44) auf einen Decodierer (40) umschalten.

10. Einrichtung nach Anspruch 9, wobei der für die Umschaltung bestimmte Befehl mindestens zwei Parameter (X, OFFSET) enthält, von denen mindestens einer die Information darüber enthält, in welchem Adressbereich das verschlüsselte Programm abgelegt ist, dadurch gekennzeichnet, dass der Decodierer (40) mit dem Standard-Prozessor (1) über einen internen Datenbus (D1) verbunden ist, dass die Mittel (30-39) eine an den internen Datenbus (D1) angeschlossene Steuerschaltung (30) enthalten, welche auf den sonst nicht verwendeten Befehl reagiert, dass die Steuerschaltung über Steuerausgänge mit einer Ladeschaltung (31) und einem Speicher (32) für die untere Adressen-Bereichsgrenze des verschlüsselten Programms und andererseits mit einer zweiten Ladeschaltung (34) und einem zweiten Speicher (35) für den zweiten Adressenbereichs-Parameter (OFFSET) in Verbindung steht, dass an den ersten Speicher (32) ein erster Vergleicher (33) angeschlossen ist, welcher den Zustand des ersten Speichers (32) mit dem Inhalt auf dem Adressenbus (A) vergleicht, dass ferner eine Summationsschaltung (36) vorgesehen ist, deren Eingänge mit dem ersten und dem zweiten Speicher (32, 35) verbunden sind und deren Ausgang, an welchem ein die obere Adressenbereichsgrenze bezeichnendes Signal anfällt, auf einen zweiten Vergleicher (37) geführt ist, dass die Ausgänge des ersten und des zweiten Vergleichers (33, 37) in einer ersten UND-Schaltung (38) miteinander verknüpft sind und dass der Ausgang der ersten UND-Schaltung in einer zweiten UND-Schaltung (39) mit einem prozessorbezogenen Steuersignal (S) verknüpft ist, welches einen Programm-Lesezyklus bestimmt.

Fig.1

0 184 023

Fig. 2

0 184 023

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | | | G 06 F 12/14 |
| Y | FR-A-2 529 000 (OPEN COMPUTER SERVICES) * Figuren 2,3; Seite 5, Zeile 20 - Seite 7, Zeile 1; Seite 8, Zeile 21 - Seite 9, Zeile 25; Seite 10, Zeilen 2-13; Seite 10, Zeile 23 - Seite 11 * | 1,7 | |
| A | | 4,9 | |
| | --- | | |
| Y | WO-A-8 102 351 (WESTERN ELECTRIC) * Figuren 2,9; Seite 3, Zeilen 8-16; Seite 7, Zeilen 11-29; Seite 11, Zeilen 19-34 * | 1,7 | |
| A | | 3,9 | RECHERCHIERTE SACHGEBIETE (Int. Cl.4) |
| | --- | | |
| A | EP-A-0 008 033 (BEST) * Figur 1; Seite 5, Zeile 11 - Seite 6, Zeile 22 * | 1 | G 06 F 12/14 |
| | --- | | |
| A | EP-A-0 083 209 (FUJITSU) * Figuren 1,6; Seite 4, Zeile 20 - Seite 6, Zeile 2; Seite 8, Zeilen 22-37 * | 1 | |
| | --- | | |
| A | EP-A-0 097 621 (MUESSLI) * Figur 1; Seite 6, Zeile 9 - Seite 9, Zeile 3 * | 1,7 | |
| | --- -/- | | |

Der vorliegende Recherchenbericht wurde für alle Patentansprüche erstellt.

| Recherchenort DEN HAAG | Abschlußdatum der Recherche 17-02-1986 | Prüfer LEDRUT P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | FR-A-2 027 419 (TEXAS INSTRUMENTS) <br> * Figur 4; Seite 7, Zeile 6 - Seite 9 * | 2,3 | |
| A | EP-A-0 114 522 (SYNERTEK) | 1 | |
| | | | |
| | | | RECHERCHIERTE SACHGEBIETE (Int. Cl.4) |

Der vorliegende Recherchenbericht wurde für alle Patentansprüche erstellt.

| Recherchenort <br> DEN HAAG | Abschlußdatum der Recherche <br> 17-02-1986 | Prüfer <br> LEDRUT P. |
|---|---|---|